# EUROPEAN PATENT APPLICATION

(11) **EP 2 664 895 A2**
(43) Date of publication of application: **20.11.2013**
(21) Application number: 13164023.7
(22) Date of filing: 16.04.2013
(51) Int. Cl.: G01C 23/00

(54) **System and method for displaying runway approach texture objects**

(30) Priority: 14.05.2012 US 201213471213
(71) Applicant: Honeywell International Inc., Morristown, NJ 07962-2245 (US)
(72) Inventor: Wyatt, Ivan Sandy, Morristown, NJ New Jersey 07962-2245 (US); Feyereisen, Thea L., Morristown, NJ New Jersey 07962-2245 (US); He, Gang, Morristown, NJ New Jersey 07962-2245 (US)
(74) Representative: Houghton, Mark Phillip

(57) **Abstract**

A system (110) and method are provided for displaying images to an aircrew member of an aircraft during approach to a runway. Synthetic approach texture objects (304, 404, 504, 604, 704, 804, 904) for the runway (302, 702, 802, 902) are modified and displayed in accordance with current coordinates, altitude, and speed of the aircraft. The approach texture objects are identical, regularly spaced objects each having a surface forming a plane (703) parallel to the runway.

## Description

### TECHNICAL FIELD

The exemplary embodiments described herein generally relates to display systems and more particularly to a display system and method for improving the ability of a pilot to judge the horizontal and vertical distance and height to a runway.

### BACKGROUND

The approach and landing is the most difficult phase of a flight due to the precision actions required and increased pilot workload. This is especially true when transiting to visual flight at the end of an instrument approach procedure. While flying the instrument approach, pilots are trained to monitor progress and make adjustment with reference to the flight instruments, e.g., the Flight Director (FD), the glideslope deviation scale, and the Horizontal Situation Indicator (HSI). These standard flight instruments have been designed to provide guidance cues in an accurate and unambiguous manner. During the visual segment of an instrument approach, the crew transitions from the instrument scan to visual cues in the outside environment. This transition requires the pilot to change from the abstraction of the schematic flight instruments to real world analog visual cues. These visual cues include: the apparent shape and size of the runway, the spacing and size of runway markings, and the apparent relative motion of aircraft along the ground. The pilot perceives the motion from objects in the environment and the texture of the ground. Through training and repetition, the pilot builds a "visual mental model" of the visual cues and how they should look as aircraft progress through the approach and landing. By comparing the "visual mental model" with the visual cues as seen from the cockpit, the pilot estimates the aircraft's position and velocity relative to the runway centerline and vertical path. The pilot makes power and control inputs based on what is seen to make the aircraft's trajectory match the remembered metal model.

Aircraft are commonly equipped with one or more display system to convey flight path and/or flight management information. Such display systems are designed and configured to assist a pilot when flying in conditions that diminish the pilot's view from the cockpit, such as, but not limited to, darkness and weather phenomenon. One example of a display system is known as a synthetic vision system (hereinafter, "SVS"), which may be more generally described as a being a dynamic condition subsystem of the aircraft. An example of a synthetic vision system is disclosed in US patent number 7,352,292. Additionally, an exemplary synthetic vision system is available for sale under the product name SmartView, manufactured by Honeywell International, Inc.

A typical SVS is configured to work in conjunction with a position determining unit associated with the aircraft as well as with dynamic sensors that sense the aircraft's altitude, heading, and attitude. The SVS typically includes a database containing information relating to the topography along the aircraft's flight path. The SVS receives inputs from the position determining unit indicative of the aircraft's location and also receives inputs from the dynamic sensors on board the aircraft indicative of the aircraft's heading, altitude, and attitude. The SVS is configured to utilize the position, heading, altitude, and orientation information and the topographical information contained in its database, and generate a three-dimensional image that shows the topographical environment through which the aircraft is flying from the perspective of a person sitting in the cockpit of the aircraft. The three-dimensional image may be displayed to the pilot on any suitable display unit accessible to the pilot. Using an SVS, the pilot can look at the display screen to gain an understanding of the three-dimensional topographical environment through which the aircraft is flying and can also see what lies ahead. One advantage of the SVS is that its image is clean and is not obstructed by any weather phenomenon.

Thus, SVS images can provide the vehicle operator with an effective interface for vehicle control. SVS image integrity, however, is limited by the integrity of the information pre-stored in the database. Accordingly, incomplete and/or outdated database information can result in SVS images of limited value.

Accordingly, it is desirable to provide a system and method for displaying a synthetic landing environment that readily improve the pilot's ability to recognize the landing environment and better judge the distance and height to the runway, while reducing the pilot's workload. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

A system and method are provided for displaying images to an aircrew member of an aircraft during approach to a runway.

In an exemplary embodiment the system comprises a database configured to store runway data, synthetic vision system data, and approach texture objects data for each of a plurality of runways; avionics equipment configured to determine coordinates, altitude, and speed of the aircraft; a display; and a processor coupled to the database and the avionics equipment, and configured to identify a desired runway; select approach texture objects for the identified runway; process the current coordinates, altitude, and speed of the aircraft; modify the selected approach texture objects for the determined coordinates, altitude, and speed; and display the modified approach texture objects and the runway on the display.

In another exemplary embodiment, the system comprises a navigational database navigation database comprising a combined wide area global positioning augmentation system and an inertial reference system and configured to determine coordinates, altitude, and speed of the aircraft and to store runway data, synthetic vision system data, and approach texture objects for each of a plurality of runways; a display; and a processor coupled to the navigational database and the display, and configured to select approach texture objects for the runway; process the current coordinates, altitude, and speed of the aircraft; modify the selected approach texture objects for the determined coordinates, altitude, and speed; and display the modified approach texture objects and the runway on the display, wherein the displayed approach texture objects comprise identical, regularly spaced objects each having a surface forming a plane parallel to the runway.

In yet another exemplary embodiment, a method comprises selecting approach texture objects for the runway; determining coordinates, altitude, and speed of the aircraft; modifying the selected approach texture objects for the determined coordinates, altitude, and speed; displaying the modified approach texture objects; and repeating the determining, modifying, and displaying steps until the approach is complete.

### BRIEF DESCRIPTION OF THE DRAWINGS

The present invention will hereinafter be described in conjunction with the following drawing figures, wherein like numerals denote like elements, and

FIG. 1 is a block diagram of a vehicle display system for generating images in accordance with an exemplary embodiment;

FIG. 2 is a flow chart of a method in accordance with an exemplary embodiment; and

FIGS. 3-9 are SVS images of landing environments in accordance with exemplary embodiments.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

A symbology, referred to herein as approach texture objects, is added to, for example, Synthetic Vision System (SVS) head-down displays or Head-Up (HUD) displays with SVS. The approach texture objects will aid the pilot in the transition from instrument flight to visual flight, providing cues to the pilot that mimic those used in the real world to judge height, location and closure rate toward the landing runway. The effect is to increase pilot performance while reducing workload, and help the pilot to build a mental picture of the approach environment which eases the transition to, and understanding of, the external, actual out-of-the-window scene in the visual phase of the approach. The approach texture objects are rendered as part of the runway objects, derived from a high integrity navigation database and will provide perceptual human benefits utilizing a high integrity database. Such texture objects can be constructed with generic similarity to the actual cues of the approach runway environment to ease the understanding and transition. The positioning of the objects are determined by the high integrity navigational database information. Approach texture objects are identical, regularly spaced objects each having a surface forming a plane parallel to the runway. As such, every approach is displayed identically to the flight crews.

The approach texture objects are two or three dimensional objects of a regular shape. They are placed at regular intervals along the approach course. As the aircraft progresses along its flight path toward the runway, the apparent shape and size of the texture objects change due to the changing position of the pilot observer. The changing geometry of the shapes provides the sense of motion and closure to the pilot.

The approach texture objects may be partially transparent, so any underlying synthetic terrain would be visible through them. The approach texture objects fill the space, between terrain levels below runway height, up to the runway height. The texture objects are rendered to be at same (or just above) the height of the landing runway. The texture objects form a flat "see-through" geometric plane and may wrap around the runway.

The flat surface of the approach texture objects is defined by the runway height from a monitored navigation database. This is an important, because the navigation database is of high integrity. The rendered synthetic terrain in the scene may be from a lower integrity Enhanced Ground Proximity Warning System (EGPWS) derived database which typically is not suitable for navigation. The runway height is actually the runway's altitude above the WGS-84 Ellipsoid (a standard ellipsoid reference surface for raw altitude data from a standard coordinate frame for the Earth). The height, location, width, and length of the approach texture objects are derived from high integrity (and monitored) runway data suitable for navigation. The flat surface formed by the approach texture objects produces a consistent "landing picture" to the pilot, the same picture at all airports regardless of the terrain in the airport area. The texture objects will not produce varying illusions caused by terrain effects as seen in the real world.

The Approach texture objects are suitable for use as a "synthetic vision" element in Head-Up (HUD), Enhanced Flight Vision Systems (EFVS) and Combined Vision Systems (CVS) display systems. The display of synthetic terrain in a HUD is problematic due to a variety of display characteristics. For example, HUDs are monochrome displays which makes realistic rendering of terrain difficult and are a "see-through" display, whereas database rendered terrain obscures the visual real world scene.

The approach texture objects along with other symbology elements, for example, a synthetic runway symbol provide all of the benefits of synthetic terrain without the clutter.

The configuration of the approach texture objects on an EFVS or CVS display should consider the sensor image. The area where the sensor image of the approach lights and runway are clear of texture objects, allowing the sensor image to seen unimpeded. The overall configuration of the approach texture objects should provide cues as to the location of the runway and the approach lights. A "notional" image of the approach lights may be imbedded in the approach texture objects. The approach texture objects outline the areas of interest in a EFVS image, thus making the pilot's task of finding the approach lights easer and reduces workload.

Although embodiments described herein are specific to aircraft display systems, it should be recognized that principles of the inventive subject matter may be applied to other display systems.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), vector processor, stream processor, specialized graphical processor used for general computations (GPGPU), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments. Any of the above devices are exemplary, non-limiting examples of a computer readable storage medium.

The steps of a method or algorithm described in connection with the embodiments disclosed herein may be embodied directly in hardware, in a software module executed by a processor, or in a combination of the two. A software module may reside in RAM memory, video memory (VRAM, DRAM), video card memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. Any of the above devices are exemplary, non-limiting examples of a computer readable storage medium.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

The following detailed description is merely exemplary in nature and is not intended to limit application and uses. Furthermore, there is no intention to be bound by any theory presented in the preceding background or the following detailed description.

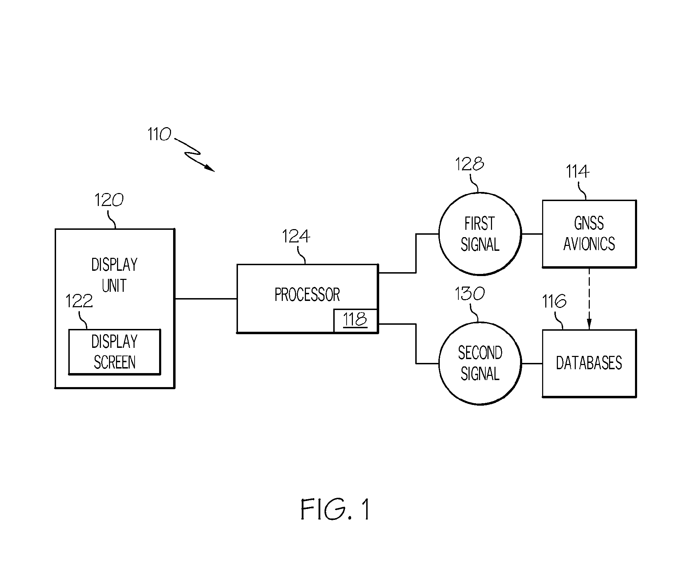

FIG. 1 is a simplified functional block diagram illustrating a system 110 for displaying images to a pilot of an aircraft landing environment. System 110 includes multiple components each of which may be configured for mounting to an aircraft. In some embodiments, system 110 may be a self-contained system such that each of the components described below are contained in a single housing and are dedicated exclusively to serving the functions of system 110, while in other embodiments, the various components described below may be standalone components or they may be components that are used as part of other systems and which are configured to be used as a shared resource between such other systems and system 110.

In the embodiment illustrated in FIG. 1, system 110 includes Global Navigation Satellite System (GNSS) and avionics sensors 114, databases 116, a display unit 120, a display screen 122, and a processor 124. The databases 116 include a synthetic vision system (SVS) and a terrain and runway database. In equivalent embodiments, system 110 may include either additional or fewer components.

In some embodiments, the system 110 may operate fully or partially integrated into an enhanced vision system (not shown), or a combined vision system (not shown) when the enhanced vision system is used together with the SVS, terrain database, and the runway database.

When used, the databases 116 include a symbol database, where synthetic symbols assigned to various airport features, for example, terrain, are stored. In some embodiments this can be stored just in the memory of the processor 124. In other embodiments, an external database might be used. Typically, the databases 116 would include; for example, a navigation database where runway locations would be stored, and a runway database which may include, for example, information about runway width and type of approach lighting system used.

An on-board avionics computer or display system uses the terrain database is to generate a three-dimensional image of the topographical environment of the approach to an airport (referred to hereinafter as "synthetic image") and generate a second signal 130 carrying the synthetic image and to provide the second signal 130 to processor 124. The terrain database may include a data storage device (not shown) containing a data base with data relating to the topography environment, which may represent either or both landscape and/or man-made structures, including approach lights, located along the aircraft's flight path. In some embodiments, the data storage device may contain such data for an entire geographical region such as a state, a country or continent. The display system may also access or include a position determining unit that is configured to determine the position of the aircraft with respect to the surface of the earth. Such a position determining unit may include, for example but not limited to, a GNSS system or an inertial navigation system. The terrain database may be configured to receive course, speed and other avionics inputs relating to the aircraft's heading, altitude and attitude. In equivalent embodiments, the display system may receive the GNSS and avionics inputs from the aircraft's GNSS and avionics sensors 114, and preferably the geographic position data (high integrity) is determined by a combination of GPS (wide area augmentation system) and inertial reference system data.

In some embodiments, the terrain database may include a dedicated processor, microprocessor, or other circuitry that is configured to take the information pertaining to the position, attitude, altitude and heading of the aircraft and to utilize the information available in the database to generate the second signal 130 that may be utilized by processor 124 to render a three-dimensional image of the topographical environment, including approach lights for a runway to which the aircraft is approaching. In other embodiments, the terrain database may not include a dedicated processor, microprocessor or other circuitry. In such embodiments, the second signal 130 would include the unprocessed sensor information and location data which could then be utilized by processor 124 to render the three dimensional image of the synthetic image. In either event, the terrain database is configured to provide second signal 130 to processor 124.

In accordance with the exemplary embodiments, the databases 116 stores approach texture objects for the desired runway for the approach, as well as a plurality of other approach texture objects for each of a plurality of runways for which the aircraft may perform an approach for landing. Approach texture objects are symbology, for which several exemplary embodiments are subsequently described, added to a SVS display. For example, the approach texture objects may be two or three dimensional rectangles that provide a graphic image allowing the pilot to judge height, location, and closure rate to the landing runway.

The display 120 is configured to provide the enhanced images to the operator. In accordance with an exemplary embodiment, the display 120 may be implemented using any one of numerous known displays suitable for rendering textual, graphic, and/or iconic information in a format viewable by the operator. Non-limiting examples of such displays include various cathode ray tube (CRT) displays, and various flat panel displays such as various types of LCD (liquid crystal display) and TFT (thin film transistor) displays. The display 120 additionally may be implemented as a panel mounted display, a HUD (head-up display) projection, or any one of numerous known technologies. It is additionally noted that the display 120 may be configured as any one of numerous types of aircraft flight deck displays. For example, it may be configured as a multi-function display, a horizontal situation indicator, or a vertical situation indicator. In the depicted embodiment, however, the display 120 is configured as a primary flight display (PFD).

Additionally, display unit 120 includes a display screen 122 that is operatively connected to display unit 120. Display screen 122 is configured to be controlled by display unit 120 and may be used to display any type of image including, but not limited to, graphics and text. In some embodiments, display unit 120 may include multiple display screens 122 and/or system 110 may include multiple display units 120.

Processor 124 may be any type of computer, computer system, microprocessor, collection of logic devices, or any other analog or digital circuitry that is configured to calculate, and/or to perform algorithms, and/or to execute software applications, and/or to execute sub-routines, and/or to be loaded with and to execute any type of computer program. Processor 124 may comprise a single processor or a plurality of processors acting in concert. In some embodiments, processor 124 may be dedicated for use exclusively with system 110 while in other embodiments processor 124 may be shared with other systems on board the aircraft. In still other embodiments, processor 124 may be integrated into any of the other components of system 110.

Processor 124 is communicatively coupled to the GNSS/avionics sensors 114 and databases 116, and is operatively coupled to display unit 120. Such communicative and operative connections may be effected through the use of any suitable means of transmission, including both wired and wireless connections. For example, each component may be physically connected to processor 124 via a coaxial cable or via any other type of wired connection effective to convey electronic signals. In other embodiments, each component may be communicatively connected to processor 124 across a bus or other similar communication corridor. Examples of suitable wireless connections include, but are not limited to, a Bluetooth connection, a Wi-Fi connection, an infrared connection, OneWireless^{™} connection, or the like. The OneWireless^{™} connection has been developed by Honeywell International, Inc., the Assignee of this document.

Being communicatively and/or operatively coupled with the GNSS/avionics sensors 114, databases 116, and display unit 120 provide processor 124 with a pathway for the receipt and transmission of signals, commands, instructions, and interrogations to and from each of the other components. Processor 124 is configured (i.e., loaded with and being capable of executing suitable computer code, software and/or applications) to interact with and to coordinate with each of the other components of system 110 for the purpose of overlaying images corresponding to the second signal 130. For example, in the illustrated embodiment, the processor 124 is configured to receive a second signal 130 from the databases 116 and to send a command to the display unit 120 instructing the display unit 120 to display portions of a corresponding image generated from database or symbols, on a display screen 122. The processor 124 may also be configured to receive a first signal 128 from the aircraft's GNSS/Avionics system 114 to aid displaying data in an iconic format.

In operation, the processor 120 is configured to process the current flight status data for the host aircraft. In this regard, the sources of flight status data generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well known devices. The data provided by the sources of flight status data may include, without limitation: airspeed data; groundspeed data; altitude data; attitude data, including pitch data and roll data; yaw data; geographic position data (high integrity), such as a combination of GPS (wide area augmentation system) and inertial reference system data; time/date information; heading information; weather information; flight path data; track data; radar altitude data; geometric altitude data; wind speed data; wind direction data; etc. The processor 120 is suitably designed to process data obtained from the sources, for example, the GNSS and avionics 114 of flight status data in the manner described in more detail herein.

The approach texture objects provide visual cues in the flight display similar to what will be seen the real world, thus exploiting the pilots *"visual metal model"* and easing the transition to the outside view. The synthetic cues provide "visual momentum" making the instrument flight more natural and intuitive.

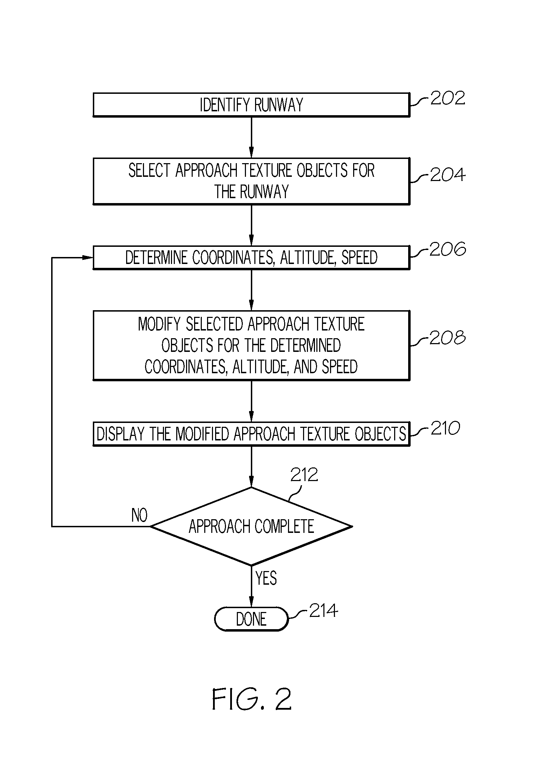

FIG. 2 is a flow chart that illustrates an exemplary embodiment of an approach texture objects display process 200 suitable for use with a flight deck display system such as the display system 120. The various tasks performed in connection with process 200 may be performed by software, hardware, firmware, or any combination thereof. For illustrative purposes, the following description of process 200 may refer to elements mentioned above in connection with FIG. 2. In practice, portions of process 200 may be performed by different elements of the described system, e.g., a processor, a display element, or a data communication component. It should be appreciated that process 200 may include any number of additional or alternative tasks, the tasks shown in FIG. 2 need not be performed in the illustrated order, and process 200 may be incorporated into a more comprehensive procedure or process having additional functionality not described in detail herein. Moreover, one or more of the tasks shown in FIG. 2 could be omitted from an embodiment of the process 200 as long as the intended overall functionality remains intact.

Referring to FIG. 2, a runway is identified 202, and approach texture objects for the runway are selected 204. Coordinates, altitude, and speed of the aircraft are determined 206 by reference to data obtained from the avionics 114. The selected approach texture objects for the determined coordinates, altitude, and speed are modified 208 within the processor 124 and displayed 210 by the display unit 120. If the approach is not completed, the process is repeated from step 206.

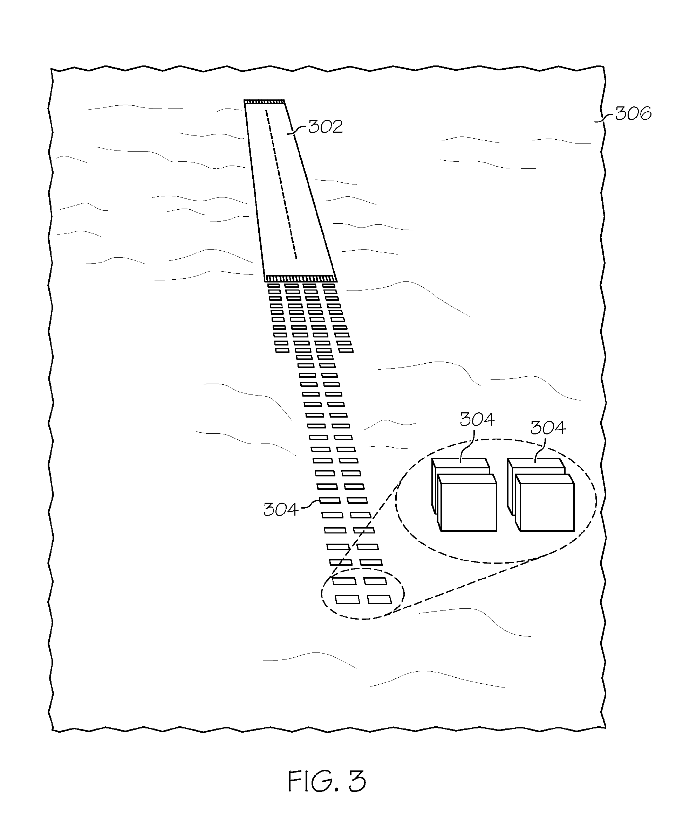

Referring to FIG. 3, a perspective view includes a runway302 and the approach texture objects 304 displayed over an SVS background, in this case a thin cloud layer 306. The individual objects 308 are three dimensional objects.

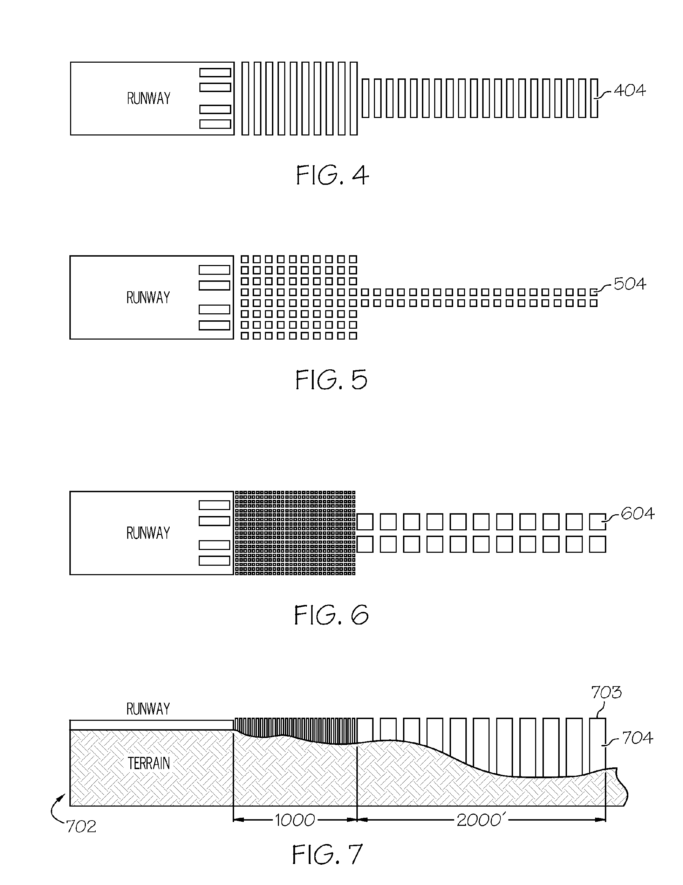

FIGS. 4-6 are top views of further exemplary embodiments of the approach texture objects 404, 504, 604 respectively. The approach texture objects 404, 504, 604 are three dimensional and are at a constant height near or just above the runway height at the approach end, forming a flat surface.

Referring to FIG. 7, a side view 702 illustrates the flat surface 703 at or above the runway 702 height for the approach texture objects 704.

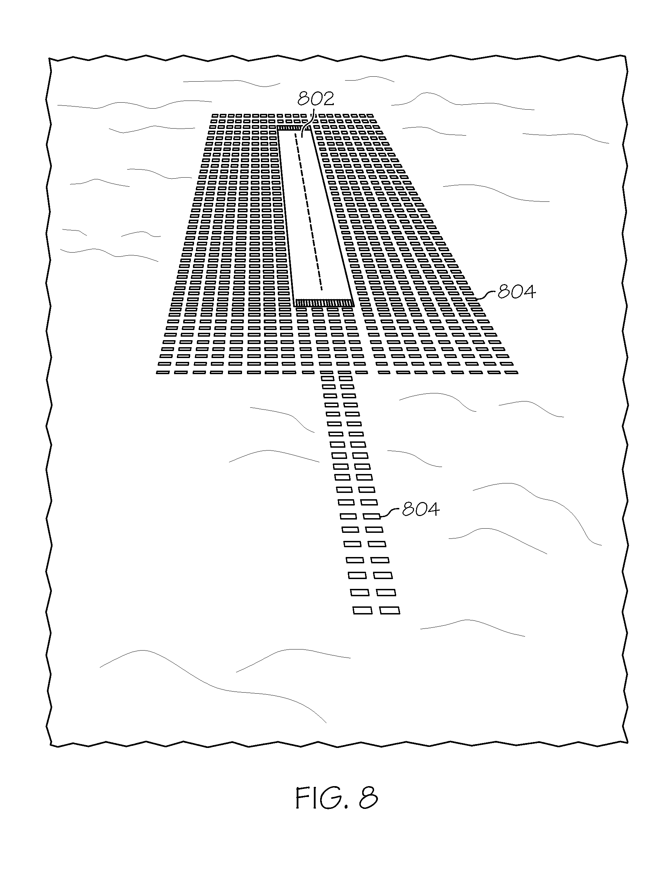

FIG. 8 is a perspective view of the approach texture objects 804 partially surrounding the runway 802, providing additional visual cues assisting the pilot in the transition from instrument to visual flight on the approach to the runway 802.

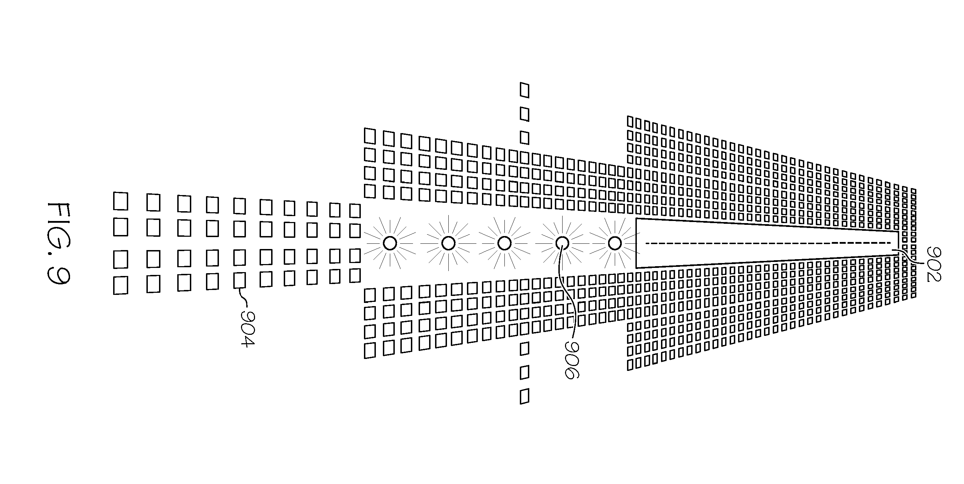

FIG. 9 is a perspective view of the approach texture objects 904 enveloping the runway 902 and the runway lights 906.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A system for displaying images to an aircrew member of an aircraft during approach to a runway, the system comprising:
a database configured to store runway data, synthetic vision system data, and approach texture objects data for each of a plurality of runways;
avionics equipment configured to determine coordinates, altitude, and speed of the aircraft;
a display; and
a processor coupled to the database and the avionics equipment, and configured to:
identify a desired runway;
select approach texture objects for the identified runway;
process the current coordinates, altitude, and speed of the aircraft;
modify the selected approach texture objects for the determined coordinates, altitude, and speed; and
display the modified approach texture objects and the runway on the display.

2. The system of claim 1 wherein the avionics equipment is a combined synthetic vision system and an enhanced vision system.

3. The system of claim 1 wherein the avionics equipment comprising a combined wide area global positioning augmentation system and an inertial reference system.

4. The system of claim 1 wherein each approach texture object comprises a flat surface forming a plane parallel to the runway.

5. The system of claim 1 wherein the approach texture objects are identical.

6. The system of claim 1 wherein the approach texture objects are positioned at regular intervals.

7. The system of claim 1 wherein the approach texture objects appear with similar character of actual approach environment.

8. The system of claim 1 wherein the processor is configured to change the size, shape, and positional relationship of the approach texture objects with each other during the approach.

9. The system of claim 1 wherein the processor is further configured to determine the height, location, width, length of objects derived from runway data in navigation database.

10. A method of displaying images to an aircrew member of an aircraft during approach to a runway, comprising:
selecting approach texture objects for the runway;
determining coordinates, altitude, and speed of the aircraft;
modifying the selected approach texture objects for the determined coordinates, altitude, and speed;
displaying the modified approach texture objects; and
repeating the determining, modifying, and displaying steps until the approach is complete.

11. The method of claim 10 wherein the displaying step comprises displaying synthetic approach texture objects by a combined vision system including synthetic and enhanced vision objects.

12. The method of claim 10 wherein the determining step comprises polling a high integrity navigation database comprising a combined wide area global positioning augmentation system and an inertial reference system.

13. The method of claim 10 wherein the displaying step comprises displaying each approach texture object forming a flat surface forming a plane parallel to the runway.

14. The method of claim 10 wherein the displaying step comprises displaying each approach texture object with an identical shape.

15. The method of claim 10 wherein the modifying step comprises changing the size, shape, and positional relationship of the approach texture objects during the approach.
